# EUROPÄISCHE PATENTANMELDUNG

(11) **EP 3 354 935 A1**
(43) Veröffentlichungstag der Anmeldung: **01.08.2018**
(21) Anmeldenummer: 18152002.4
(22) Anmeldetag: 17.01.2018
(51) Int. Cl.: F16H 55/36

(54) **VORRICHTUNG ZUR DREHMOMENTÜBERTRAGUNG**

(30) Priorität: 31.01.2017 DE 102017201534
(71) Anmelder: Benninghoven GmbH & Co.KG Mülheim, 54486 Mülheim / Mosel (DE)
(72) Erfinder: Caspers, Florian, 54516 Wittlich (DE)
(74) Vertreter: Rau, Schneck & Hübner Patentanwälte Rechtsanwälte PartGmbB

(57) **Zusammenfassung**

Eine Vorrichtung zur Drehmomentübertragung umfasst eine mit einer angetriebenen Welle (13) bezüglich einer Antriebsachse (4) drehfest verbindbare Nabe (11), eine koaxial zur Nabe (11) angeordnete Zahnriemenscheibe (18), mindestens ein Axialbolzen (26), der die Nabe (11) mit der Zahnriemenscheibe (18) verbindet und mindestens ein Dämpfungselement (20) zur gedämpften Aufnahme des mindestens einen Axialbolzens (26).

## Beschreibung

Die vorliegende Patentanmeldung nimmt die Priorität der deutschen Patentanmeldung DE 10 2017 201 534.9 in Anspruch, deren Inhalt durch Bezugnahme hierin aufgenommen wird.

Die Erfindung betrifft eine Vorrichtung zur Drehmomentübertragung.

Für die Übertragung eines Antriebsdrehmoments von einem Getriebemotor auf eine Welle sind verschiedene Lösungen bekannt. Ein Keilrippenriemen ermöglicht eine hohe Eigendämpfung und die Minderung von Lastspitzen durch Schlupf und Dehnung. Der Bauraum des Keilrippenriemens ist groß und deshalb nachteilig. Für die Übertragung großer Antriebsdrehmomente ist eine hohe Vorspannung des Keilrippenriemens erforderlich. Die hohe Vorspannung des Keilrippenriemens bewirkt eine zusätzliche Last auf die Drehlager der Riemenscheiben. Eine reduzierte Baugröße bei vergleichbarem Antriebsdrehmoment ist mittels eines Zahnriemens möglich. Die Vorspannung bei dem Zahnriemen ist reduziert. Der Zahnriemen weist lediglich eine geringe Eigendämpfung auf. Wegen der formschlüssigen Drehmomentübertragung können Lastspitzen nicht kompensiert werden. Eine alternative Drehmomentübertragung ist mittels einer Rutschkupplung möglich, bei der bei Überlast der Riemenantrieb durchrutscht. Im Normalbetrieb weist die Rutschkupplung keine dämpfenden Eigenschaften auf.

Der Erfindung liegt die Aufgabe zugrunde, eine Vorrichtung zur Drehmomentübertragung bereitzustellen, die die Nachteile des Standes der Technik überwindet und insbesondere kleinbauend ausgeführt ist und insbesondere Lastspitzen kompensieren kann.

Die Aufgabe wird durch die Merkmale des Anspruchs 1 gelöst. Der Kern der Erfindung besteht darin, dass eine Vorrichtung zur Drehmomentübertragung eine Zahnriemenscheibe aufweist, um mittels eines Zahnriemens formschlüssig zur Drehmomentübertragung zusammenzuwirken, wobei eine ausreichende Eigendämpfung der Vorrichtung mittels mindestens eines Dämpfungselements gewährleistet ist. Das mindestens eine Dämpfungselement dient zur gedämpften Aufnahme mindestens eines Axialbolzens, mit dem die Zahnriemenscheibe mit einer Nabe verbunden ist. Die Nabe ist drehfest bezüglich einer Antriebsachse mit einer angetriebenen Welle verbunden. Die angetriebene Welle wird auch als Antriebswelle bezeichnet. Insbesondere sind mehrere Dämpfungselemente vorgesehen, die jeweils einen Axialbolzen aufnehmen. Die Eigendämpfung der Vorrichtung ist dadurch gewährleistet, dass die Verbindung zwischen der Nabe und der Zahnriemenscheibe gedämpft ist. Eine Lastspitze wird zuverlässig von dem mindestens einen Dämpfungselement gedämpft aufgenommen.

Insbesondere ist der mindestens eine Axialbolzen in fluchtend angeordneten Öffnungen der Nabe und der Zahnriemenscheibe angeordnet. Die Nabe und die Zahnriemenscheibe sind über den Axialbolzen und das Dämpfungselement unmittelbar miteinander verbunden. Zusätzliche Verbindungselemente sind entbehrlich.

Eine Vorrichtung gemäß Anspruch 2 ermöglicht eine vorteilhafte, insbesondere kleinbauende, Anordnung des mindestens einen Axialbolzens in dem mindestens einen Dämpfungselement. Insbesondere ist der Axialbolzen in das hülsenförmige Dämpfungselement eingesteckt, insbesondere durchgesteckt. Der mindestens eine Axialbolzen ist hinsichtlich seiner Bolzenlängsachse vollumfänglich von dem mindestens einen Dämpfungselement umgeben. Die gedämpfte Aufnahme des Axialbolzens ist im Wesentlichen richtungsunabhängig. Eine Lastspitze bei der Drehmomentübertragung kann robust und flexibel aufgenommen werden.

Eine Ausführung des mindestens einen Dämpfungselements gemäß Anspruch 3 gewährleistet eine ausreichende Dämpfungswirkung. Dadurch, dass ein Verhältnis des Dämpfungselements-Außendurchmessers zu dem Dämpfungselement-Innendurchmesser in jedem Fall größer oder gleich 2,5 ist, ist eine ausreichende Wandstärke des Dämpfungselements für die erforderliche Dämpfungswirkung gewährleistet. Durch die Festlegung der Wandstärke des Dämpfungselements kann die Dämpfungswirkung der Vorrichtung unmittelbar festgelegt werden.

Eine Anordnung des Dämpfungselements gemäß Anspruch 4 ist integrativ und kleinbauend ausgeführt.

Mehrere Dämpfungselemente gemäß Anspruch 5 ermöglichen eine, insbesondere homogene, Verteilung einer Drehmomentbelastung des Axialbolzens und/oder des Dämpfungselements. In Abhängigkeit der Anzahl der Dämpfungselemente kann die Dämpfungswirkung der Vorrichtung gezielt eingestellt werden. Je größer die Anzahl der verwendeten Dämpfungselemente ist, desto größer ist die Dämpfungswirkung.

Ein Material gemäß Anspruch 6 gewährleistet eine ausreichende Dämpfungswirkung. Insbesondere weist das mindestens eine Dämpfungselement eine Shorehärte in einem Bereich von A 65±5 bis D 75, insbesondere in dem Bereich Shore A 65±5 bis Shore A 97±0,5, insbesondere von Shore A 80±3 bis Shore 95±1 und insbesondere von Shore A 90±2 auf. Durch die Auswahl des Materials für das Dämpfungselement kann die Dämpfungswirkung der Vorrichtung gezielt festgelegt werden. Es ist grundsätzlich denkbar, Dämpfungselemente aus verschiedenen Materialien zu verwenden, um eine lokal unterschiedliche Dämpfungswirkung einzustellen. Insbesondere ist dadurch gewährleistet, dass verschieden große Lastspitzen zuverlässig mit einem jeweils von der Lastspitze primär beanspruchten Dämpfungselement aufzunehmen. Beispielsweise dienen besonders harte und/oder steife Materialien mit einer hohen Härte und/oder Eigensteifigkeit dazu, hohe Drehmomentstöße aufzunehmen. Dagegen eignen sich Materialien reduzierter Härte und/oder Eigensteifigkeit dazu, bereits geringe Lastsprünge zuverlässig zu dämpfen.

Eine Ausführung des Dämpfungselements gemäß Anspruch 7 ermöglicht besonders vorteilhafte Materialeigenschaften. Die Materialienzeichnen sich insbesondere durch ihre vorteilhaften chemischen und/oder physikalischen Eigenschaften aus, insbesondere deren Temperaturbeständigkeit, deren Wasserbeständigkeit und/oder deren UV-Beständigkeit. Die Materialien sind insbesondere in einem Temperaturbereich von -20°C bis 80°C temperaturbeständig. Die Wasserbeständigkeit der Materialien äußert sich dadurch, dass die übrigen Materialeigenschaften durch Kontakt der Materialien mit Wasser nicht verändert und insbesondere nicht verschlechtert werden. Zusätzlich sind die Materialien ölbeständig, d.h. eine Kontaktierung der Materialien mit Fetten, Mineralölen und/oder Benzin beeinträchtigt deren Materialeigenschaften nicht.

Beispielsweise weist das mindestens eine Dämpfungselement ein Polyurethan-Elastomer auf Polyetherbasis (TPU) und/oder einen Ethylen-Propylen-Dien-Kautschuk (EPDM) auf. Polyurethan-Elastomer auf Polyetherbasis ist auch unter der Bezeichnung Eladur bekannt, das mit verschiedenen Shore-Härten und Elastizitäten verfügbar ist. Grundsätzlich gilt, dass je höher die Shore-Härte ist, desto geringer ist die Elastizität des Materials. Die Elastizität beträgt zwischen 5% und 40%, insbesondere zwischen 15% und 35% und insbesondere zwischen 25% und 30%.

Alternativ kann auch thermoplastisches Elastomer auf Urethanbasis (TPE-U) für das Dämpfungselement verwendet werden. Die mechanischen Eigenschaften, insbesondere die Härte, Dämpfungseigenschaften und Festigkeitseigenschaften dieses Materials sind im Wesentlichen vergleichbar mit denen von Eladur. Zusätzlich weist TPE-U eine gute Wasser-, UV-, Ozon- und Öl-Beständigkeit auf.

Die Ausführung des Axialbolzens gemäß Anspruch 8 ermöglicht eine vorteilhafte Anordnung des Dämpfungselements in der Nabe. Dadurch, dass ein Vorspannabschnitt des Axialbolzens einen Vorspannabschnitt-Außendurchmesser aufweist, der größer ist als ein Dämpfungselement-Innendurchmesser, wird das Dämpfungselement zumindest bereichsweise und insbesondere radial aufgeweitet. Das Dämpfungselement ist damit vorgespannt und insbesondere vorgespannt in der Bohrung der Nabe angeordnet.

Eine Ausführung des Vorspannabschnitts gemäß Anspruch 9 ermöglicht eine vorteilhafte und unmittelbare Vorspannung des Dämpfungselements.

Eine Ausführung des Axialbolzens gemäß Anspruch 10 ermöglicht eine unkomplizierte und insbesondere wieder lösbare Anordnung des Axialbolzens.

Eine Außenverzahnung der Zahnriemenscheibe eine gemäß Anspruch 11 ermöglicht ein unmittelbares Zusammenwirken der Zahnriemenscheibe mit einem Zahnriemen. Insbesondere ist der Zahnriemen Bestandteil der Vorrichtung. Der Zahnriemen greift formschlüssig in die Außenverzahnung der Zahnriemenscheibe.

Ein Lager gemäß Anspruch 12 dient zur Zentrierung der Zahnriemenscheibe auf der Nabe. Das Lager ist insbesondere als Gleitlager und/oder Wälzlager ausgeführt. Insbesondere ist das Lager eine Gleitlagerbuchse.

Ein Axiallager gemäß Anspruch 13 ermöglicht eine Axialabstützung des Dämpfungselements an der Zahnriemenscheibe. Das Axiallager ist insbesondere in Form einer gelochten Ringscheibe ausgeführt.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine perspektivische Ansicht einer Anlage zur Asphaltverkleinerung mit einer erfindungsgemäßen Vorrichtung zur Drehmomentübertragung,
- Fig. 2: eine vergrößerte Perspektivdarstellung der Vorrichtung gemäß Fig. 1, und
- Fig. 3: einen Längsschnitt gemäß Schnittlinie III-III in Fig. 2.

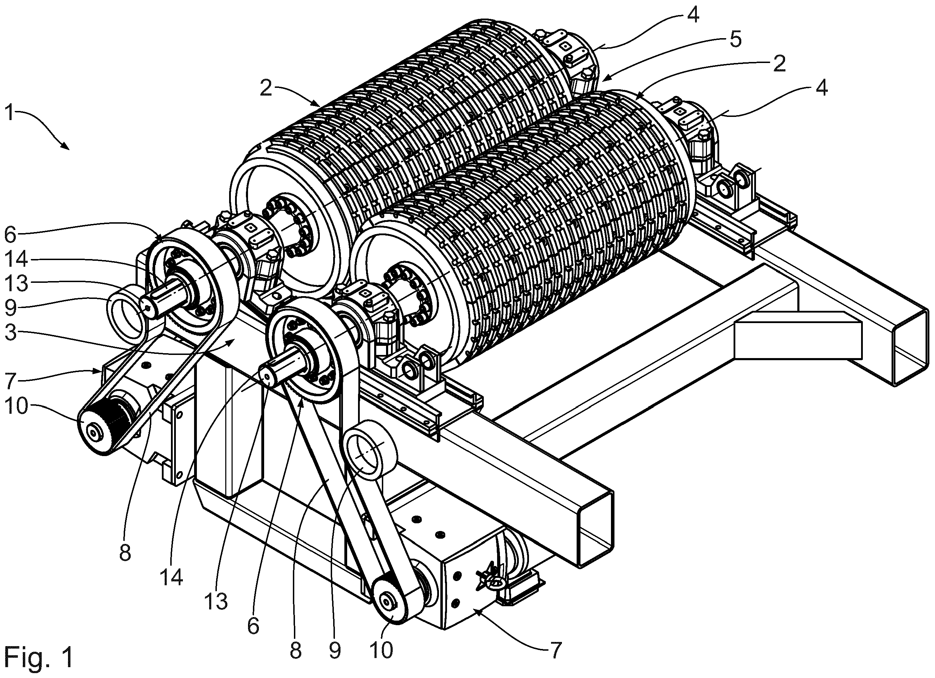

Fig. 1 zeigt eine Anlage 1 zur Asphaltzerkleinerung. Die Anlage 1 weist zwei Zerkleinerungswellen 2 auf, die an einem Rahmen 3 um jeweils eine Drehachse 4 drehantreibbar gelagert angeordnet sind. Die Drehachse 4 ist eine Antriebsachse. Die Zerkleinerungswellen 2 sind am Rahmen 3 derart angeordnet, dass die Drehachsen 4 parallel und beabstandet zueinander angeordnet sind. Es ist auch denkbar, dass die Drehachsen 4 geneigt zueinander angeordnet sind. Die Zerkleinerungswellen 2 begrenzen einen Zerkleinerungsspalt 5, in den zu zerkleinerndes Material, insbesondere Altasphaltmaterial, zugegeben und durch die, insbesondere gegensinnig, rotierenden Zerkleinerungswellen 2 zerkleinert wird. Das zerkleinerte Material wird mittels eines nicht dargestellten Siebs abgesiebt.

Zum Antreiben um die Drehachse 4 ist jede Zerkleinerungswelle 2 über eine Vorrichtung 6 zur Drehmomentübertragung mit einem elektro-mechanischen Getriebemotor 7 in drehmomentübertragener Weise verbunden. Die Vorrichtung 6 weist insbesondere einen Zahnriemen 8 auf, der mittels einer am Rahmen 3 gehaltenen Spannrolle 9 spannbar ist. Der Zahnriemen 8 weist eine Innenverzahnung auf, die mit einem Antriebsritzel 10 zusammenwirkt, das von dem Getriebemotor 7 angetrieben wird. Die Drehbewegung des Antriebsritzels 10 wird über den Zahnriemen 8 auf die Vorrichtung 6 übertragen.

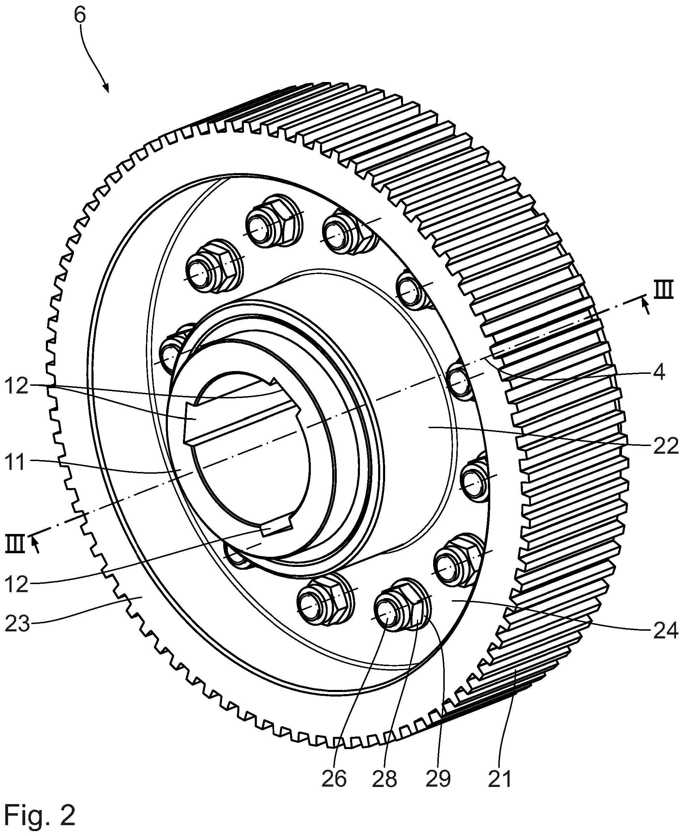

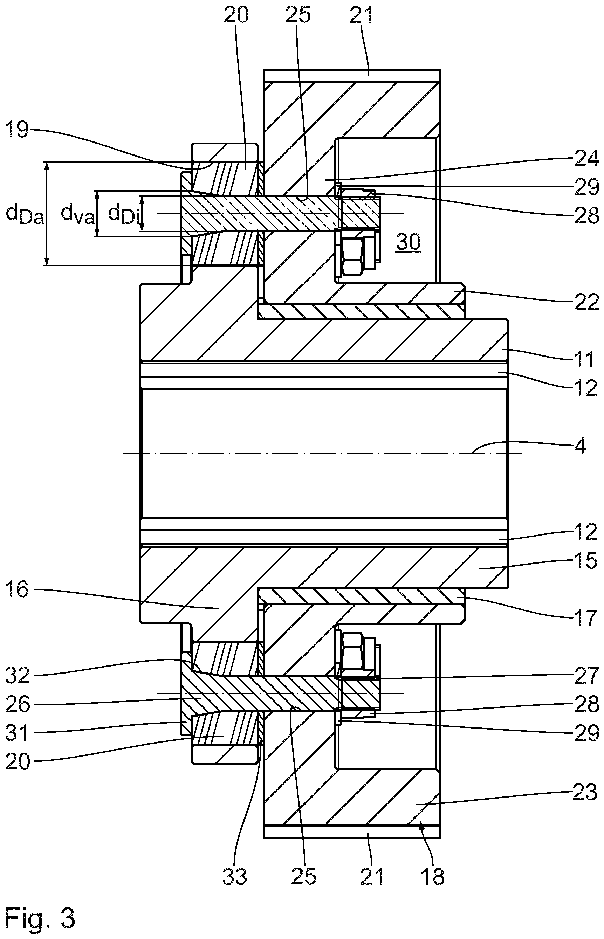

Nachfolgend wird anhand von Fig. 2 und 3 die Vorrichtung 6 näher erläutert. Die Vorrichtung 6 umfasst eine zentral angeordnete Nabe 11, deren Innenkontur in einer Ebene senkrecht zur Drehachse 4 unrund ausgeführt ist. Gemäß dem gezeigten Ausführungsbeispiel weist die Innenkontur der Nabe 11 drei rechteckförmige Axialnuten 12 auf, die sich entlang der Drehachse 4 erstrecken. Die Axialnuten 12 sind in Umfangsrichtung um die Drehachse 4 jeweils gleich beabstandet, also mit einem Drehwinkel von 120° um die Drehachse 4, an der Innenseite der Nabe 11 angeordnet.

Aufgrund der unrunden Innenkontur der Nabe 11 ist es möglich, ein Drehmoment auf eine Antriebswelle 13 unmittelbar und unkompliziert zu übertragen. Die Antriebswelle ist eine angetriebene Welle. Die Antriebswelle 13 ist drehfest bezüglich der Drehachse 4 mit der Zerkleinerungswelle 2 verbunden. Die Antriebswelle 13 weist zu den Axialnuten 12 korrespondierende Vorsprünge 14 auf.

Die Nabe 11 weist einen hülsenförmigen Tragabschnitt 15 und einen einteilig damit verbundenen Tellerabschnitt 16 auf. An einer Außenseite des Tragabschnitts 15 ist ein Lager in Form einer Gleitlagerbuchse 17 angeordnet, auf der eine Zahnriemenscheibe 18 angeordnet ist.

Der Tellerabschnitt 16 ragt in radialer Richtung bezogen auf die Drehachse 4, die einer Antriebsachse entspricht, über. In dem radial überstehenden Tellerabschnitt 16 der Nabe 11 sind entlang einer Kreislinie um die Drehachse 4 mehrere Bohrungen 19 vorgesehen. Gemäß dem gezeigten Ausführungsbeispiel weist die Nabe 11 im Tellerabschnitt 16 zwölf Bohrungen 19 auf. In jede Bohrung 19 ist ein hülsenförmiges Dämpfungselement 20 eingesetzt.

Jedes Dämpfungselement 20 weist einen Dämpfungselement-Außendurchmesser d_{Da} und einen Dämpfungselement-Innendurchmesser d_{Di} auf. Gemäß dem gezeigten Ausführungsbeispiel gilt: d_{Da}/d_{Di} = 3,0. Das Verhältnis des Dämpfungselement-Außendurchmessers d_{Da} zu dem Dämpfungselement-Innendurchmesser d_{Di} kann auch größer als 3 sein. Wesentlich ist, dass das Verhältnis des Dämpfungselement-Außendurchmessers d_{Da} zu dem Dämpfungselement-Innendurchmesser d_{Di} größer oder gleich 2,5 ist. Die Dämpfungselemente sind aus einem elastischen Material hergestellt. Die Dämpfungselemente 20 weisen jeweils eine gute Dämpfungseigenschaft auf. Das Dämpfungselement 20 ist gemäß dem gezeigten Ausführungsbeispiel aus dem Polyurethan-Elastomer auf Polyetherbasis hergestellt, das eine Härte von Shore A90±2 aufweist. Das Material wird auch als Eladur 100 bezeichnet. Das Material ist zu Unterscheidungszwecken insbesondere mit grünen Pigmenten eingefärbt. Das Material weist eine Elastizität von 30% auf.

Die Zahnriemenscheibe 18 weist eine Außenverzahnung 21 auf, in die die Innenverzahnung des Zahnriemens 8 eingreift. Die Zahnriemenscheibe 18 weist einen inneren Hülsenbund 22 auf, mit dem die Zahnriemenscheibe 18 an der Gleitlagerbuchse 17 anliegt. Die Außenverzahnung 21 ist an einem äußeren Ringsteg 23 der Zahnriemenscheibe 18 einteilig angeformt. Der äußere Ringsteg 23 ist mit dem inneren Hülsenbund 22 über einen dazwischen angeordneten Scheibenabschnitt 24 einstückig verbunden. Der Scheibenabschnitt 24 weist gegenüber dem äußeren Ringsteg 23 und dem inneren Hülsenbund 22 eine reduzierte Dicke entlang der Drehachse 4 auf. Die Dicke des Scheibenabschnitts 24 beträgt insbesondere weniger als die Hälfte des Ringstegs 23 und damit weniger als die Hälfte der Außenverzahnung 21.

Der Scheibenabschnitt 24 weist mehrere, gemäß dem gezeigten Ausführungsbeispiel zwölf, Durchgangsöffnungen 25 auf, die fluchtend zu den Bohrungen 19 der Nabe 11 anordenbar sind.

In die fluchtenden Bohrungen 19 und Durchgangsöffnungen 25 ist jeweils ein Axialbolzen 26 durchgesteckt. Der Axialbolzen 26 weist einen Gewindeabschnitt mit einem Außengewinde 27 auf. Das Außengewinde 27 steht an einer rückwärtigen, dem Tellerabschnitt 16 abgewandten Stirnseite des Scheibenabschnitts 24 über. Auf das Außengewinde 27 des Axialbolzens 26 ist eine Befestigungsmutter 28 aufgeschraubt. Zwischen der Befestigungsmutter 28 und der Stirnseite des Scheibenabschnitts 24 ist eine Ringscheibe 29 eingelegt. Dadurch, dass der Scheibenabschnitt 24 gegenüber dem Ringsteg 23 und dem Hülsenbund 22 eine reduzierte Dicke aufweist, ist die Befestigungsmutter 28 in einem ringförmigen Hohlraum 30 der Zahnriemenscheibe 18 geschützt angeordnet.

An einem dem Außengewinde 27 gegenüberliegend angeordneten Ende weist der Axialbolzen einen anteilig angeformten Bolzenkopf 31 auf. Der Bolzenkopf 31 ist scheibenförmig ausgeführt. Der im Wesentlichen zylindrische Schaft des Axialbolzens 26 weist in einem dem Bolzenkopf 31 zugewandten Bereich einen Vorspannabschnitt 32 auf. Der Vorspannabschnitt 32 weist entlang der Drehachse 4 einen konischen Verlauf auf. Der Verlauf des Vorspannabschnitts 32 entlang der Drehachse 4 kann auch konkav oder konvex ausgeführt sein. Der Bolzenkopf 31 steht in radialer Richtung an dem Schaft über. Der Bolzenkopf weist einen gegenüber dem Schaft vergrößerten Außendurchmesser auf. Ein maximaler Vorspann-Außendurchmesser d_{Va} ist größer als der Dämpfungselement-Innendurchmesser d_{Di}. Durch das Einsetzen des Axialbolzens 26 wird das Dämpfungselement 20 radial aufgeweitet, also vorgespannt.

Als Axiallager ist eine gelochte Ringscheibe 33 zwischen den Dämpfungselementen 20 bzw. der Nabe 11 und der Zahnriemenscheibe 18 angeordnet.

Die Zahnriemenscheibe 18 ist mit der Nabe 11 durch die Axialbolzen 26 formschlüssig verbunden. Die Axialbolzen 26 sind jeweils parallel zur Drehachse 4 angeordnet. Vorspannkräfte und/oder radial wirkende Kräfte auf die Vorrichtung 6 werden von der Gleitlagerbuchse 17 auf die Antriebswelle 13 übertragen. Dadurch sind die Dämpfungselemente 20 von radialen Kräften und/oder Vorspannkräften entkoppelt. Das zu übertragende Antriebsdrehmoment und/oder auftretende Lastspitzen werden durch die Dämpfungselemente 20 eingeleitet. Die Vorrichtung 6 ermöglicht einerseits die Verwendung eines kleinbauenden, platzsparenden Zahnriemenantriebs mit integrierter Dämpfung zur Kompensation von Lastspitzen auf den Antrieb in Form des Getriebemotors 7. Andererseits wirkt das Antriebsdrehmoment ausschließlich auf die entkoppelten Dämpfungselemente 20. Die Dämpfungselemente 20 können insbesondere unmittelbar auf die erforderliche Dämpfungscharakteristik des Antriebs in Form des Getriebemotors 7 abgestimmt werden. Insbesondere kann die Härte des Materials der Dämpfungselemente 20 flexibel und individuell festgelegt werden.

Nachfolgend wird die Funktion der Vorrichtung 6 näher erläutert. Die Anlage 1 zur Asphaltzerkleinerung wird betrieben, indem die Zerkleinerungswellen 2 gegenläufig jeweils mittels des Getriebemotors 7 über den Zahnriemen 8 und die Vorrichtung 6 angetrieben werden. Die hierbei auftretenden Drehmomente können bis zu 3000 Nm betragen. Störstoffe, insbesondere metallische Störstoffe wie ein gebrochener Meißel einer Asphaltfräsmaschine, die in den Zerkleinerungsspalt zwischen die Zerkleinerungswellen 2 geraten, verursachen extreme Lastsprünge und sprunghafte Drehmomentänderungen. Diese Lastspitzen der Drehmomentbeaufschlagung können von der Nabe 11 und den Dämpfungselementen 20 anteilig, insbesondere größtenteils, insbesondere vollständig, kompensiert werden. Die Drehmomentübertragung von der Antriebswelle 13 über die Nabe 11 und die Zahnriemenscheibe 18 auf den Zahnriemen 8 und den Getriebemotor 7 erfolgt gedämpft. Die Belastung des elektro-mechanischen Getriebemotors 7 ist reduziert. Die Lebensdauer des Getriebemotors 7 ist erhöht.

## Patentansprüche

1. Vorrichtung zur Drehmomentübertragung umfassend
a. eine mit einer angetriebenen Welle (13) bezüglich einer Antriebsachse (4) drehfest verbindbare Nabe (11),
b. eine koaxial zur Nabe (11) angeordnete Zahnriemenscheibe (18),
c. mindestens ein Axialbolzen (26), der die Nabe (11) mit der Zahnriemenscheibe (18) verbindet,
d. mindestens ein Dämpfungselement (20) zur gedämpften Aufnahme des mindestens einen Axialbolzens (26).

2. Vorrichtung gemäß Anspruch 1, **dadurch gekennzeichnet, dass** das mindestens eine Dämpfungselement (20) hülsenförmig ausgeführt ist.

3. Vorrichtung gemäß einem der vorstehenden Ansprüche, **dadurch gekennzeichnet, dass** das mindestens eine Dämpfungselement (20) einen Dämpfungselement-Innendurchmesser (d_{Di}) und einen Dämpfungselement-Außendurchmesser (d_{Da}) aufweist, wobei gilt: d_{Da} / d_{Di} ≥ 3,5, insbesondere d_{Da} / d_{Di} ≥ 3,0 und d_{Da} / d_{Di} ≥ 2,5.

4. Vorrichtung gemäß einem der vorstehenden Ansprüche, **dadurch gekennzeichnet, dass** das mindestens eine Dämpfungselement (20) in einer korrespondierenden Bohrung (19) der Nabe (11) angeordnet ist.

5. Vorrichtung gemäß einem der vorstehenden Ansprüche, **gekennzeichnet durch** mehrere Dämpfungselemente (20), die jeweils einen Axialbolzen (26) aufnehmen, wobei insbesondere mindestens drei, insbesondere mindestens vier, insbesondere mindestens sechs und insbesondere mindestens zwölf Dämpfungselemente (20) vorgesehen sind, wobei die Dämpfungselemente (20) konzentrisch zur Antriebsachse (4), insbesondere gleichmäßig beabstandet, angeordnet sind.

6. Vorrichtung gemäß einem der vorstehenden Ansprüche, **dadurch gekennzeichnet, dass** das mindestens eine Dämpfungselement (20) ein Material mit einer Shore-Härte in einem Bereich von A 65±5 bis D 75, insbesondere in dem Bereich Shore A 65±5 bis Shore A 97±0,5, insbesondere von Shore A 80±3 bis Shore 95±1 und insbesondere von Shore A 90±2 aufweist.

7. Vorrichtung gemäß einem der vorstehenden Ansprüche, **dadurch gekennzeichnet, dass** das mindestens eine Dämpfungselement (20) ein Polyurethan-Elastomer auf Polyetherbasis (TPU) und/oder Ethylen-Propylen-Dien-Kautschuk (EPDM) aufweist.

8. Vorrichtung gemäß einem der vorstehenden Ansprüche, **dadurch gekennzeichnet, dass** der mindestens eine Axialbolzen (26) einen Vorspannabschnitt (32) aufweist, wobei ein Vorspannabschnitt-Außendurchmesser (d_{Va}) größer ist als ein Dämpfungselement-Innendurchmesser (d_{Di}).

9. Vorrichtung gemäß Anspruch 8, **dadurch gekennzeichnet, dass** der Vorspannabschnitt (32) entlang der Antriebsachse (4) zumindest abschnittsweise konisch ausgeführt ist.

10. Vorrichtung gemäß einem der vorstehenden Ansprüche, **dadurch gekennzeichnet, dass** der mindestens eine Axialbolzen (26) einen Gewindeabschnitt mit einem Außengewinde (27) aufweist.

11. Vorrichtung gemäß einem der vorstehenden Ansprüche, **dadurch gekennzeichnet, dass** die Zahnriemenscheibe (18) eine Außenverzahnung (21) zum Eingreifen in einen Zahnriemen (8) aufweist.

12. Vorrichtung gemäß einem der vorstehenden Ansprüche, **gekennzeichnet durch** ein in radialer Richtung bezogen auf die Antriebsachse (4) zwischen der Zahnriemenscheibe (18) und der Nabe (11) angeordnetes Lager, insbesondere in Form einer Gleitlagerbuchse (17).

13. Vorrichtung gemäß einem der vorstehenden Ansprüche, **gekennzeichnet durch** ein Axiallager, insbesondere in Form einer Ringscheibe (33), das in axialer Richtung der Antriebsachse zwischen der Nabe (11) und der Zahnriemenscheibe (18) angeordnet ist.
